# EUROPEAN PATENT SPECIFICATION

(11) **EP 4 207 440 B1**
(45) Date of publication and mention of the grant of the patent: **19.06.2024**
(21) Application number: 22203572.7
(22) Date of filing: 25.10.2022
(51) Int. Cl.: H01M 50/103, H01M 50/133, H01M 50/169, H01M 50/176, H01M 50/342

(54) **SECONDARY BATTERY AND A METHOD OF MANUFACTURING A SECONDARY BATTERY**
SEKUNDÄRBATTERIE UND VERFAHREN ZUR HERSTELLUNG EINER SEKUNDÄRBATTERIE
BATTERIE SECONDAIRE ET PROCÉDÉ DE FABRICATION D'UNE BATTERIE SECONDAIRE

(30) Priority: 29.12.2021 KR 20210191202
(43) Date of publication of application: 05.07.2023
(73) Proprietor: Samsung SDI Co., Ltd., Yongin-si, Gyeonggi-do 17084 (KR)
(72) Inventor: Lee, Hyun Soo, 17084 Yongin-si, Gyeonggi-do (KR)
(74) Representative: Gulde & Partner

(56) References cited:
- WO-A1-2023/031110
- DE-A1-102007 010 744
- DE-U1-202006 010 634

## Description

### BACKGROUND

### 1. Field

Aspects of some embodiments of the present disclosure relate to a secondary battery and a method of manufacturing a secondary battery.

### 2. Description of the Related Art

Unlike a primary battery that cannot be charged, a secondary battery is battery that can generally be repeatedly charged and discharged. A low-capacity secondary battery may include one single cell packaged in the form of a pack, and may be used for various portable small-sized electronic devices, such as cellular phones or camcorders, and a high-capacity secondary battery in which several tens of cells are connected in a battery pack is widely used as a power source for motor drives, such as those in hybrid vehicles or electric vehicles. Such secondary batteries may be classified into a cylindrical battery, a prismatic battery, a pouchtype (or polymer-type) battery, and the like, according to their external appearance. For example, the prismatic battery may be formed by incorporating into a can an electrode assembly formed with a separator interposed between a positive electrode plate and a negative electrode plate, an electrolyte, and the like, and installing a cap plate in the can.

The above information disclosed in this Background section is only for enhancement of understanding of the background and therefore the information discussed in this Background section does not necessarily constitute prior art. DE 10 2007 010744 A1 discloses a battery cell housed in a pipe-shaped can with side plates on both sides, wherein the wall thickness of the can varies along the circumference.

### SUMMARY

Aspects of some embodiments of the present disclosure include a secondary battery which can be relatively easily manufactured and a method of manufacturing thereof.

In addition, aspects of some embodiments of the present disclosure include a secondary battery having excellent stability.

A secondary battery according to claim 1 is provided.

According to some embodiments, a safety vent may be positioned on the second short side, and the thickness of the second short side may be greater than the thickness of each of the first short side, the first long side, and the second long side.

According to some embodiments, a hole may be formed in the second short side, and the safety vent may be located on the hole to be fixed by lap welding.

According to some embodiments of the present disclosure, a method is provided of manufacturing a secondary battery including an electrode assembly comprising a first electrode plate, a second electrode plate, and a separator interposed between the first electrode plate and the second electrode plate, and a can for accommodating the electrode assembly. The method includes: molding one long rectangular pipe by an extrusion process, cutting the long rectangular pipe to a certain length to form a first short side, a second short side, a first long side, and a second long side of the can, welding a first side plate to one end of the can, welding a second side plate to the other end of the can.

According to some embodiments, the method may further include fixing a safety vent on a hole in the second short side (112) by lap welding.

### BRIEF DESCRIPTION OF DRAWINGS

FIG. 1 is a perspective view of a secondary battery according to some embodiments of the present disclosure.
FIG. 2 is a front view of a secondary battery according to some embodiments of the present disclosure.
FIG. 3 is a plan view of a secondary battery according to some embodiments of the present disclosure.
FIG. 4 is a bottom view of a secondary battery according to some embodiments of the present disclosure.
FIG. 5 is a left side view of a secondary battery according to some embodiments of the present disclosure.
FIG. 6 is a right side view of a secondary battery according to some embodiments of the present disclosure.
FIG. 7 is a cross-sectional view of a can of a secondary battery according to some embodiments of the present disclosure, taken along the line 7-7 in FIG. 1.
FIG. 8 is a schematic diagram of a process of manufacturing a can of a secondary battery according to some embodiments of the present disclosure.

### DETAILED DESCRIPTION

Hereinafter, preferred embodiments of the present invention will be described in detail with reference to the accompanying drawings.

Examples of the present invention are provided to more completely explain the present invention to those skilled in the art, and the following examples may be modified in various other forms. The present invention, however, may be embodied in many different forms and should not be construed as being limited to the example (or illustrated) embodiments set forth herein. ,

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise" and/or "comprising" when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

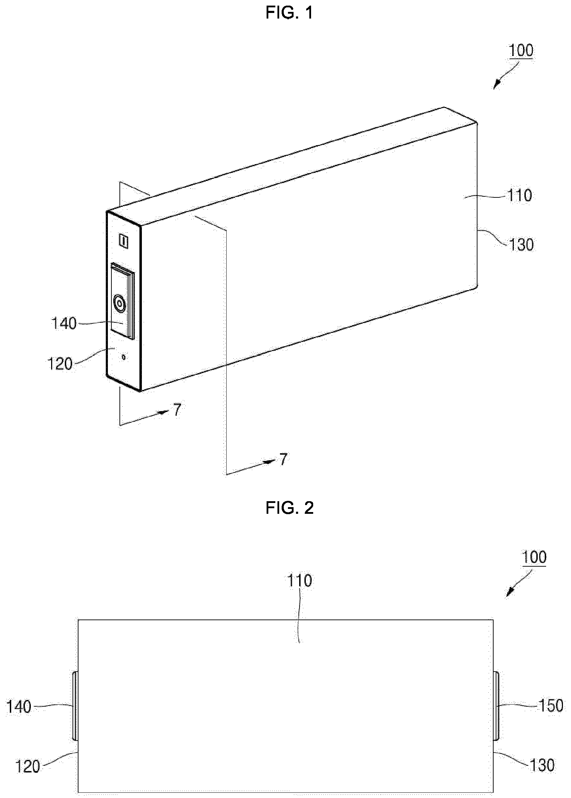

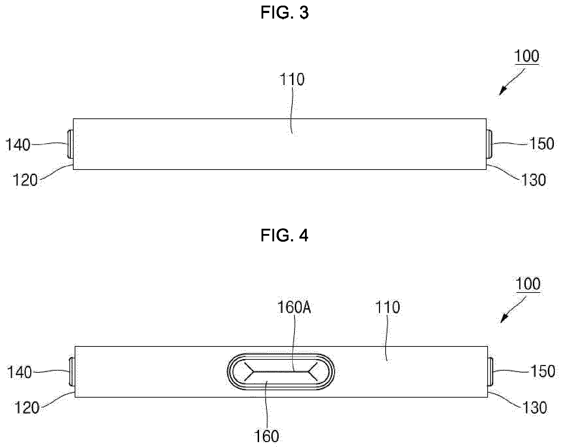

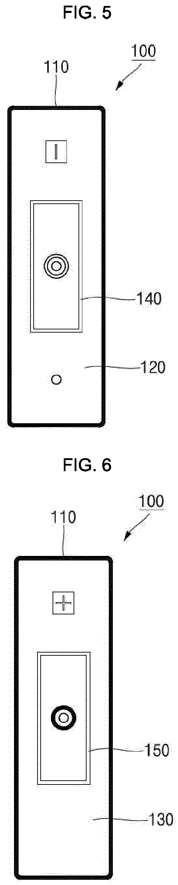

FIG. 1 is a perspective view of a secondary battery 100 according to some embodiments of the present disclosure, FIG. 2 is a front view of the secondary battery 100 according to some embodiments of the present disclosure, FIG. 3 is a top view of the a secondary battery 100 according to some embodiments of the present disclosure, FIG. 4 is a bottom view of the secondary battery 100 according to some embodiments of the present disclosure, FIG. 5 is a left side view of the secondary battery 100 according to some embodiments of the present disclosure, and FIG. 6 is a right side view of the secondary battery 100 according to some embodiments of the present disclosure.

Referring to FIGS. 1 to 6, the secondary battery 100 according to some embodiments of the present disclosure includes an electrode assembly, a can 110, a first side plate 120, a second side plate 130, a first side terminal 140, and a second side terminal 150. The electrode assembly according to some embodiments may be located inside the can 110.

The electrode assembly includes a first electrode plate, a second electrode plate, and a separator.

The first electrode plate may be any one of a negative electrode plate and a positive electrode plate. For example, when the first electrode plate is a negative electrode plate, the first electrode plate may include a negative electrode coated portion that is coated with a negative electrode active material and a negative electrode uncoated portion that is not coated with a negative electrode active material, on a negative electrode current collector plate made of a conductive metal thin plate, for example, copper or nickel foil or mesh. The negative electrode active material may include, for example, a carbon-based material, Si, Sn, tin oxide, a tin alloy composite, transition metal oxide, lithium metal nitrite, or metal oxide.

The second electrode plate may be the other one of a negative electrode plate and a positive electrode plate. For example, when the second electrode plate is a positive electrode plate, the second electrode plate may include a positive electrode coated portion that is coated with a positive electrode active material and a positive electrode uncoated portion that is not coated with a positive electrode active material, on a positive electrode current collector plate made of a thin conductive metal plate, for example, aluminum foil or mesh. The positive electrode active material may include a chalcogenide compound, for example, a composite metal oxide, such as LiCoO₂, LiMn₂O₄, LiNiO₂, LiNiMnO₂, or the like.

The separator is interposed between the first electrode plate and the second electrode plate, and serves to prevent an electrical short between the first electrode plate and the second electrode plate. The separator may be made of, for example, polyethylene, polypropylene, a porous copolymer of polyethylene and polypropylene, or the like.

The can 110 serves to accommodate the electrode assembly and an electrolyte.

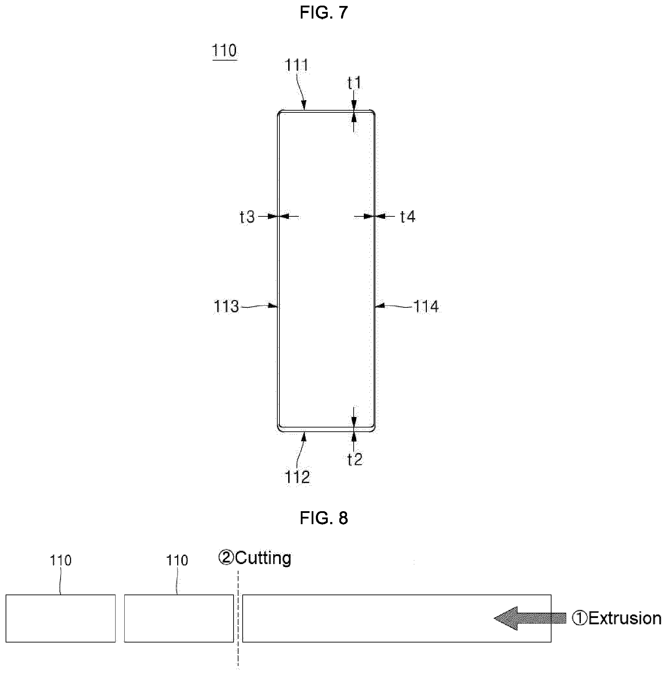

Referring to FIG. 7, which is a cross-sectional view of the can 110 of the secondary battery 100 according to some embodiments of the present disclosure, taken along the line 7-7 in FIG. 1, the can 110 is formed in a pipe shape (e.g., a tube or conduit shape). The can 110 is formed in a rectangular pipe shape (e.g., a tube having a rectangular cross-section). Hereinafter, in the can 110, two regions having relatively short sides are referred to as a first short side 111 and a second short side 112, respectively, and two regions having relatively long sides are referred to as a first long side 113 and a second long side 114, respectively.

In this case, the thicknesses t1 and t2 of the first short side 111 and the second short side 112 are greater than the thicknesses t3 and t4 of the first long side 113 and the second long side 114. Accordingly, with respect to the first short side 111 and the second short side 112, the rigidity and cooling efficiency may be improved.

Meanwhile, the safety vent 160 may be positioned on the second short side 112. When gas is generated inside the can 110, the safety vent 160 is automatically ruptured by the pressure due to the generated gas to release the gas and pressure, thereby preventing the secondary battery 100 from exploding. To this end, the safety vent 160 may have a notch 160A formed to induce rupture. The safety vent 160 may have a hole formed through the second short side 112 and may be located on the hole to then be fixed by lap welding. Here, the thickness t2 of the second short side 112 is preferably greater than the thickness t1 of the first short side 111. Accordingly, by reinforcing rigidity through a relatively large thickness, it is possible to prevent the second short side 112 from being unintentionally deformed during lap welding.

According to some embodiments, when the can 110 is formed in a rectangular pipe shape and the safety vent 160 is positioned on the second short side 112, the thickness t2 of the second short side 112 is largest, and the thickness t1 of the first short side 111 may be greater than the thicknesses t3 and t4 of the first and second long sides 114. Thus, the thickness of the can 110 along the circumference (e.g., the edges in a cross section) or a circumferential direction, may vary.

In order to describe a method of manufacturing the can 110, reference is made to FIG. 8, which is a schematic diagram of a process of manufacturing a can of a secondary battery according to some embodiments of the present disclosure, and the can 110 may be formed by being molded into one long rectangular pipe by an extrusion process and then cut to a certain length. Here, through a gap between a square die and a square mandrel, the thicknesses of the first short side 111, the second short side 112, the first long side 113, and the second long side 114 can be easily set.

The first side plate 120 is formed in a square plate shape to correspond to the open end of the can 110. Accordingly, the first side plate 120 is welded to one end of the can 110 and serves to seal.

The second side plate 130 is formed in a square plate shape to correspond to the other open end of the can 110. Accordingly, the second side plate 130 is welded to the other end of the can 110 and serves to seal.

The first side terminal 140 is electrically connected to a negative electrode uncoated portion of the first electrode plate of the electrode assembly, passes through the first side plate 120 and is exposed to the outside. Accordingly, the first side terminal 140 serves as a negative electrode terminal. In this case, an insulating member is provided between the first side terminal 140 and the first side plate 120 to prevent an electrical short therebetween.

The second side terminal 150 is electrically connected to a positive electrode uncoated portion of the second electrode plate of the electrode assembly, penetrates the second side plate 130 and is exposed to the outside. Accordingly, the second side terminal 150 serves as a positive electrode terminal. In this case, an insulating member is provided between the second side terminal 150 and the second side plate 130 to prevent an electrical short therebetween.

In the above-described secondary battery, since the negative electrode terminal (first side terminal) and the positive electrode terminal (second side terminal) are provided on the left and right sides, the upper and lower portions thereof can be effectively cooled at the same time. In the case of a conventional prismatic battery, since a negative electrode terminal and a positive electrode terminal are provided on the upper portion thereof, there is a disadvantage in that the upper portion is difficult to cool.

In addition, in the case of a conventional prismatic battery, since a negative electrode terminal and a positive electrode terminal are provided on the upper portion thereof, there is a limitation in utilizing an upper space. In contrast, in the above-described secondary battery, since the negative electrode terminal (first side terminal) and the positive electrode terminal (second side terminal) are provided on the left and right sides, an upper space thereof can be efficiently used.

In addition, in the case of a conventional prismatic battery, since a negative electrode terminal and a positive electrode terminal are provided on the upper portion thereof, charging/discharging current flows in an approximately U-shape, and thus there is a problem in that a specific area is rapidly deteriorated. However, in the above-described secondary battery, since the negative electrode terminal (first side terminal) and the positive electrode terminal (second side terminal) are provided on the left and right sides, charging/discharging current flows in the horizontal direction, thereby suppressing battery deterioration.

As described above, some embodiments of the present disclosure may include a secondary battery which can be relatively easily manufactured by manufacturing a can by forming a single long rectangular pipe through an extrusion process and cutting the same to a length (e.g., a set or predetermined length).

Here, by forming the short side more thickly than the long side, the rigidity and cooling efficiency can be improved.

For example, by forming the short side on which the safety vent is positioned most thickly, the structural stability when the safety vent is installed can be reinforced.

## Claims

1. A secondary battery (100) comprising:
an electrode assembly comprising a first electrode plate, a second electrode plate, and a separator between the first electrode plate and the second electrode plate;
a can (110) accommodating the electrode assembly and having a pipe shape and having a thickness (t1, t2, t3, t4) varying along a circumference of the pipe shape;
a first side plate (120) sealing a first end of the can (110);
a second side plate (130) sealing a second end of the can (110);
a first side terminal (140) electrically connected to the first electrode plate and exposed to the outside through the first side plate (120); and
a second side terminal (150) electrically connected to the second electrode plate and exposed to the outside through the second side plate (130), wherein the can (110) is formed in a rectangular pipe shape, and has a first short side (111), a second short side (112), a first long side (113), and a second long side (114), and wherein the thickness (t1, t2) of each of the first short side (111) and the second short side (112) is greater than the thickness (t3, t4) of each of the first long side (113) and the second long side (114).

2. The secondary battery (100) of claim 1, wherein a safety vent (160) is on the second short side (112), and the thickness (t2) of the second short side (112) is greater than the thickness (t1, t3, t4) of each of the first short side (111), the first long side (113), and the second long side (114).

3. The secondary battery (100) of claim 2, wherein a hole is formed in the second short side (112), and the safety vent (160) is located on the hole.

4. A method of manufacturing a secondary battery (100) according to one of claims 1 through 3, the method comprising:
molding one long rectangular pipe by an extrusion process and cutting the long rectangular pipe to a certain length to form the first short side (111), the second short side (112), the first long side (113), and the second long side (114) of the can (110); welding the first side plate (120) to one end of the can (110); and
welding the second side plate (130) to the other end of the can (110).

5. The method of claim 4, further comprising:
fixing a safety vent (160) on a hole in the second short side (112) by lap welding.

## Patentansprüche

1. Sekundärbatterie (100), umfassend:
eine Elektrodenanordnung, die eine erste Elektrodenplatte, eine zweite Elektrodenplatte und einen Separator zwischen der ersten Elektrodenplatte und der zweiten Elektrodenplatte enthält;
eine Dose (110), die die Elektrodenanordnung aufnimmt und eine Rohrform aufweist und eine Dicke (t1, t2, t3, t4) aufweist, die entlang eines Umfangs der Rohrform variiert;
eine erste Seitenplatte (120), die ein erstes Ende der Dose (110) abdichtet;
eine zweite Seitenplatte (130), die ein zweites Ende der Dose (110) abdichtet;
einen ersten Seitenanschluss (140), der elektrisch mit der ersten Elektrodenplatte verbunden ist und durch die erste Seitenplatte (120) nach außen freiliegt; und
einen zweiten Seitenanschluss (150), der elektrisch mit der zweiten Elektrodenplatte verbunden ist und durch die zweite Seitenplatte (130) nach außen freiliegt, wobei die Dose (110) in einer rechteckigen Rohrform ausgebildet ist und eine erste kurze Seite (111), eine zweite kurze Seite (112), eine erste lange Seite (113) und eine zweite lange Seite (114) aufweist, und wobei die Dicke (t1, t2) jeder der ersten kurzen Seite (111) und der zweiten kurzen Seite (112) größer ist als die Dicke (t3, t4) jeder der ersten langen Seite (113) und der zweiten langen Seite (114).

2. Sekundärbatterie (100) nach Anspruch 1, wobei sich eine Sicherheitsentlüftung (160) auf der zweiten kurzen Seite (112) befindet und die Dicke (t2) der zweiten kurzen Seite (112) größer ist als die Dicke (t1, t3, t4) jeder der ersten kurzen Seite (111), der ersten langen Seite (113) und der zweiten langen Seite (114).

3. Sekundärbatterie (100) nach Anspruch 2, wobei in der zweiten kurzen Seite (112) ein Loch ausgebildet ist und die Sicherheitsentlüftung (160) an dem Loch angeordnet ist.

4. Verfahren zur Herstellung einer Sekundärbatterie (100) nach einem der Ansprüche 1 bis 3, wobei das Verfahren umfasst:
Formen eines langen rechteckigen Rohrs durch ein Extrusionsverfahren und Schneiden des langen rechteckigen Rohrs auf eine bestimmte Länge, um die erste kurze Seite (111), die zweite kurze Seite (112), die erste lange Seite (113) und die zweite lange Seite (114) der Dose (110) auszubilden; Schweißen der ersten Seitenplatte (120) an ein Ende der Dose (110); und
Schweißen der zweiten Seitenplatte (130) an das andere Ende der Dose (110).

5. Verfahren nach Anspruch 4, ferner umfassend:
Befestigen einer Sicherheitsentlüftung (160) an einem Loch in der zweiten kurzen Seite (112) durch Überlappschweißen.

## Revendications

1. Batterie secondaire (100) comprenant :
un ensemble d'électrode comprenant une première plaque d'électrode, une deuxième plaque d'électrode, et un séparateur entre la première plaque d'électrode et la deuxième plaque d'électrode ;
une boîte (110) recevant l'ensemble d'électrode et présentant une forme de tuyau et présentant une épaisseur (t1, t2, t3, t4) variant le long d'une circonférence de la forme de tuyau ;
une première plaque latérale (120) étanchéifiant une première extrémité de la boîte (110) ;
une deuxième plaque latérale (130) étanchéifiant une deuxième extrémité de la boîte (110) ;
une première borne latérale (140) connectée électriquement à la première plaque d'électrode et exposée à l'extérieur à travers la première plaque latérale (120) ; et
une deuxième borne latérale (150) connectée électriquement à la deuxième plaque d'électrode et exposée à l'extérieur à travers la deuxième plaque latérale (130), dans laquelle la boîte (110) est formée en une forme de tuyau rectangulaire, et présente un premier côté court (111), un deuxième côté court (112), un premier côté long (113), et un deuxième côté long (114), et dans laquelle l'épaisseur (t1, t2) de chacun du premier côté court (111) et du deuxième côté court (112) est plus grande que l'épaisseur (t3, t4) de chacun du premier côté long (113) et du deuxième côté long (114).

2. Batterie secondaire (100) selon la revendication 1, dans laquelle un évent de sécurité (160) est sur le deuxième côté court (112), et l'épaisseur (t2) du deuxième côté court (112) est plus grande que l'épaisseur (t1, t3, t4) de chacun du premier côté court (111), du premier côté long (113), et du deuxième côté long (114).

3. Batterie secondaire (100) selon la revendication 2, dans laquelle un trou est formé dans le deuxième côté court (112), et l'évent de sécurité (160) est situé sur le trou.

4. Procédé de fabrication d'une batterie secondaire (100) selon l'une quelconque des revendications 1 à 3, le procédé comprenant :
le moulage d'un long tuyau rectangulaire par un processus d'extrusion et la découpe du long tuyau rectangulaire à une certaine longueur pour former le premier côté court (111), le deuxième côté court (112), le premier côté long (113), et le deuxième côté long (114) de la boîte (110) ; le soudage de la première plaque latérale (120) à une extrémité de la boîte (110) ; et
le soudage de la deuxième plaque latérale (130) à l'autre extrémité de la boîte (110).

5. Procédé selon la revendication 4, comprenant en outre :
la fixation d'un évent de sécurité (160) sur un trou dans le deuxième côté court (112) par soudage par recouvrement.
